# EUROPÄISCHE PATENTSCHRIFT

(11) **EP 3 775 592 B1**
(45) Veröffentlichungstag und Bekanntmachung des Hinweises auf die Patenterteilung: **11.05.2022**
(21) Anmeldenummer: 19703938.1
(22) Anmeldetag: 22.01.2019
(51) Int. Cl.: F16D 21/06

(54) **REIBKUPPLUNG**
FRICTION CLUTCH
EMBRAYAGE À FRICTION

(30) Priorität: 06.04.2018 DE 102018108165
(43) Veröffentlichungstag der Anmeldung: 17.02.2021
(73) Patentinhaber: Schaeffler Technologies AG & Co. KG, 91074 Herzogenaurach (DE)
(72) Erfinder: DAIKELER, René, 77880 Sasbach (DE); BÖHME, David, 77830 Bühlertal (DE); HUBER, Patrick, 77704 Oberkirch (DE); WAGNER, Eduard, 77656 Offenburg (DE); ISHMURATOV, Radmir, 77815 Bühl (DE); FEURER, Frank, 77855 Achern-Großweier (DE); PATZE, Steffen, 77815 Bühl (DE)
(86) Internationale Anmeldenummer: PCT/DE2019/100058
(87) Internationale Veröffentlichungsnummer: WO 2019/192640

(56) Entgegenhaltungen:
- DE-A1- 10 016 602
- DE-A1-102017 102 732
- DE-B3-102016 213 906
- US-A1- 2003 213 669

## Beschreibung

Die vorliegende Erfindung betrifft eine als Doppelkupplung ausgebildete Reibkupplung, insbesondere für den Antriebsstrang eines Kraftfahrzeuges.

Doppelkupplungen sind als bekannt anzusehen. Aus der DE 10 2017 102 732 A1 ist beispielsweise eine solche Doppelkupplung im Dreimassendesign mit einer Zentralplatte und zwei axial verrückbaren Anpressplatten bekannt, die auf den Oberbegriff des Anspruchs 1 lesbar ist. Solche Doppelkupplungen haben regelmäßig Probleme in der Dauerhaltbarkeit durch den entstehenden Abrieb und thermische Probleme, da die entstehende Reibungswärme nicht schnell genug abgeführt werden kann.

Aus der US 2003/0213669 A1 ist eine Reibkupplung mit einer Druckplatte bekannt, in deren Reibfläche mindestens eine Nut ausgebildet ist, die jeweils von einem inneren Rand der Reibfläche zu einem äußeren Rand der Reibfläche reicht

Der vorliegenden Erfindung liegt die Aufgabe zugrunde, die aus dem Stand der Technik bekannten Probleme zumindest teilweise zu überwinden und insbesondere eine Doppelkupplung anzugeben mit verbesserter Abriebabfuhr und verbessertem thermischen Verhalten.

Diese Aufgabe wird gelöst mit den Merkmalen des unabhängigen Anspruchs 1. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Die erfindungsgemäße Reibkupplung , insbesondere für den Antriebsstrang eines Kraftfahrzeugs, zum Kuppeln einer Eingangswelle mit einer ersten Ausgangswelle und/oder einer zweiten Ausgangswelle, mit einer zweilagigen Zentralplatte, einer ersten Anpressplatte, die zum Verpressen mindestens eines ersten Reibbelags einer ersten Kupplungsscheibenanordnung zwischen der ersten Anpressplatte und der Zentralplatte axial verlagerbar ist, und einer zweiten Anpressplatte, die zum Verpressen mindestens eines zweiten Reibbelags einer zweiten Kupplungsscheibenanordnung zwischen der zweiten Anpressplatte und der Zentralplatte axial verlagerbar ist, wobei durch die axiale Verlagerung der ersten und zweiten Anpressplatte ein Reibschluss zwischen einer Reibfläche der jeweiligen Anpressplatte und Reibbelägen der jeweiligen Kupplungsscheibenanordnung und zwischen den Reibbelägen der jeweiligen Kupplungsscheibenanordnung und einer Reibfläche der Zentralplatte herstellbar und aufhebbar ist, zeichnet sich dadurch aus, dass mindestens eines der folgenden Elemente:
- die erste Reibfläche der ersten Anpressplatte,
- die zweite Reibfläche der zweiten Anpressplatte und
- mindestens eine der Reibflächen der Zentralplatte
mit mindestens einer Nut ausgebildet ist, die jeweils von einem inneren Rand der jeweiligen Reibfläche zu einem äußeren Rand der jeweiligen Reibfläche reicht.

Die Ausbildung von Nuten, die durchgehend von einem inneren Rand einer Reibfläche zu einem äußeren Rand der jeweiligen Reibfläche führen in Rotation zum Transport von Abrieb von innen nach außen aufgrund der anliegenden Zentripetalkräfte und der durch die Nuten strömenden Luft. Diese Nuten können in einem oder mehreren, ja sogar in allen der genannten Elemente ausgebildet sein. Hierbei kann jeweils eine Nut oder können mehrere Nuten ausgebildet sein. Die Nuten bewirken gleichzeitig auch eine verbesserte Kühlung des jeweiligen Elementes, da durch die Rotation Luft zur Kühlung durch die Nuten durchtreten kann. So kann die entstehende Reibungswärme zumindest teilweise durch die durch die Nuten strömende Luft abtransportiert werden.

Gemäß einer vorteilhaften Ausgestaltung ist die mindestens eine Nut als Durchstellung ausgebildet ist.

Durch dieses Umformverfahren können die Nuten einfach, kostengünstig und präzise hergestellt werden, insbesondere dann, wenn das entsprechende Element kostengünstig aus einem Blech hergestellt wird. Insbesondere weisen die Durchstellungen auch relativ steile Flanken auf, die den für die Durchströmung mit Luft und den Abtransport von Abrieb zur Verfügung stehenden Querschnitt der Nut vergrößern. Die zur Nut korrespondierende Erhebung auf der anderen Seite des jeweiligen Elementes kann in vorteilhafter Weise insbesondere bei Ausbildung der Nut in den Lagen der Zentralplatte beziehungsweise den diese bildenden Zentralplattenbauteilen als Kontaktfläche für das andere Zentralplattenbauteil genutzt werden, so dass sich die Steifigkeit der Zentralplatte erhöht.

Gemäß einer vorteilhaften Ausgestaltung ist die mindestens eine Nut in einem von Null verschiedenen Winkel relativ zur radialen Richtung ausgebildet.

Durch die Schrägstellung der Nuten wird das Transportverhalten durch die Nut weiter verbessert. Die jeweilige Nut funktioniert in Rotation nach Art eines Schaufelrades, so dass die durchströmbare Luftmenge vergrößert wird.

Gemäß einer vorteilhaften Ausgestaltung ist mindestens eines der folgenden Bauteile: die erste Anpressplatte, die zweite Anpressplatte, ein die erste Lage der Zentralplatte bildendes erstes Zentralplattenbauteil und ein die zweite Lage der Zentralplatte bildendes zweites Zentralplattenbauteil aus Blech ausgebildet.

Die Ausbildung mindestens eines der genannten Bauteile aus Blech ermöglicht eine Kostenreduktion bei der Bereitstellung der entsprechenden Reibkupplung. Die verbleibenden Bauteile können aus einem Gussmaterial hergestellt werden.

Mindestens eines der die Lagen der Zentralplatte bildenden Zentralplattenbauteile weist mindestens eine Nut in der jeweiligen Reibfläche auf und das die jeweils andere Lage bildende Zentralplattenbauteil weist auf der der jeweiligen Reibfläche entgegengesetzten Seite mindestens eine erste Erhebung mit einer Höhe auf, die der Höhe der jeweiligen Nut entspricht.

Die Ausbildung der ersten Erhebungen ermöglicht die Schaffung weiterer Kontaktpunkte, so dass die Steifigkeit der Zentralplatte erhöht werden kann. Bevorzugt ist eine Mehrzahl von ersten Erhebungen, die über den Umfang der Zentralplatte verteilt sind, insbesondere gleichverteilt. Weiterhin ist es in diesem Zusammenhang vorteilhaft, wenn die mindestens eine erste Erhebung eine Position aufweist, die der Position keiner Nut in dem die jeweils anderen Lage der Zentralplatte bildenden Zentralplattenbauteil entspricht. Dies ermöglicht die Bildung von Kontaktstellen außerhalb der Nuten, so dass durch die Position der ersten Erhebung(en) und damit die Definition der Kontaktstellen eine gezielte Einstellung der Steifigkeit der Zentralplatte erfolgen kann.

Gemäß einer vorteilhaften Ausgestaltung umfasst mindestens eines der folgenden Elemente: die erste Anpressplatte, die zweite Anpressplatte, ein die erste Lage der Zentralplatte bildendes erstes Zentralplattenbauteil und ein die zweite Lage der Zentralplatte bildendes Zentralplattenbauteil mindestens einen Verschleißanschlag umfasst, der einen Minimalabstand zum in Reibschluss bringbaren benachbarten Element festlegt.

Dies ermöglicht die Definition eines axialen Endabstandes, welcher der jeweiligen geklemmten Kupplungsscheibenanordnung im verschlissenen Zustand noch zur Verfügung gestellt wird.

Gemäß einer vorteilhaften Ausgestaltung weist die zweite Anpressplatte mindestens zwei zweite Durchstellungen zum Zusammenwirken mit Sperrelementen eines weiteren Bauteils, insbesondere eines Drucktopfes, zur Definition der Position dieses Bauteils bei der Montage an der zweiten Anpressplatte aufweist.

Weiterhin wird ein Kraftfahrzeug vorgeschlagen, welches im Antriebsstrang eine entsprechende Reibkupplung aufweist.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: ein Beispiel einer Reibkupplung;
- Fig. 2 und 3:: ein Beispiel einer ersten Anpressplatte;
- Fig. 4 und 5:: ein Beispiel einer zweiten Anpressplatte;
- Fig. 6 und 7:: ein Beispiel eines zweiten Zentralplattenbauteils;
- Fig. 8 und 9:: ein Beispiel eines ersten Zentralplattenbauteils;
- Fig. 10 - 12:: drei Ansichten der aus dem ersten Zentralplattenbauteils und dem zweiten Zentralplattenbauteils zusammengesetzten Zentralplatte; und
- Fig. 13:: Details einer zusammengebauten Reibkupplung.

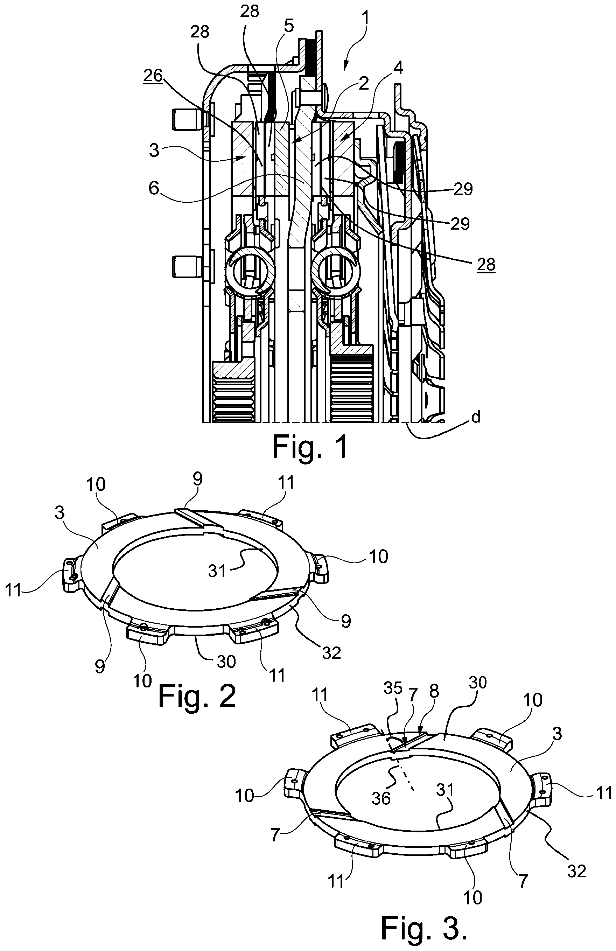

In der Beschreibung der Figuren sind gleiche Teile mit gleichen Bezugszeichen versehen. Fig. 1 zeigt ein Beispiel einer als Doppelkupplung ausgeführten Reibkupplung 1. Diese weist eine zweilagige Zentralplatte 2 auf, sowie eine erste Anpressplatte 3 und eine zweite Anpressplatte 4. Die zweilagige Zentralplatte 2 ist aus einem ersten Zentralplattenbauteil 5 und einem zweiten Zentralplattenbauteil 6 aufgebaut. Die erste Anpressplatte 3 und die zweite Anpressplatte 4 sind dabei in Bezug auf die Drehachse d axial verschieblich ausgelegt, so dass zwischen Zentralplatte 2 und erster Anpressplatte 3 eine erste Kupplungsscheibenanordnung 26 und zwischen Zentralplatte 2 und zweiter Anpressplatte 4 eine zweite Kupplungsscheibenanordnung 27 verpressbar ist, so dass ein Reibschluss zwischen erster Anpressplatte 2, erster Kupplungsscheibenanordnung 26 mit erstem Reibbelag 28 und Zentralplatte 2 einerseits und zwischen zweiter Anpressplatte 4, zweiter Kupplungsscheibenanordnung 27 mit zweitem Reibbelag 29 und Zentralplatte 2 herstellbar und lösbar ist, so dass Drehmoment übertragbar ist. Der Reibschluss erfolgt dabei zwischen einer Reibfläche 30, 42 der jeweiligen Anpressplatte 3, 4 und den genannten Reibbelägen 28, 29 der jeweiligen Kupplungsscheibenanordnung 26, 27 und zwischen den Reibbelägen 28, 29 der jeweiligen Kupplungsscheibenanordnung 26, 27 und einer Reibfläche 43, 44 der Zentralplatte 2.

Fig. 2 und 3 zeigen eine mögliche Ausgestaltung der ersten Anpressplatte 3 in zwei verschiedenen Ansichten. Diese weist auf ihrer ersten Reibfläche 30, die im zusammengebauten Zustand der Zentralplatte 2 zugewandt ist, Nuten 7 auf. Diese ist als Durchstellung ausgebildet, so dass sich auf der gegenüberliegenden Seite (Siehe Fig. 2) eine Erhebung 9 bildet. Die Nuten 7 weisen jeweils Kanten 8 einer bestimmten Höhe auf. Die Nuten 7 sind dabei so ausgebildet, dass sie einen inneren Rand 31 der ersten Reibfläche 30 mit einem äußeren Rand 32 der ersten Reibfläche 30 verbinden. Die Nuten 7 bilden dabei einen von null verschiedenen Winkel 35 mit der radialen Richtung 36.

Durch die Nuten 7 wird erreicht, dass Abrieb vom ersten Reibbelag 8 oder von der ersten Reibfläche 30 nach außen zum äußeren Rand 32 abtransportiert werden kann. Weiterhin verbessern die Nuten 7 die Belüftungssituation, so dass durch die Herstellung des Reibschlusses entstehende thermische Energie besser abgeführt werden kann.

Die erste Anpressplatte 3 weist ferner erste Verbindungselemente 10 und zweite Verbindungselemente 11 auf.

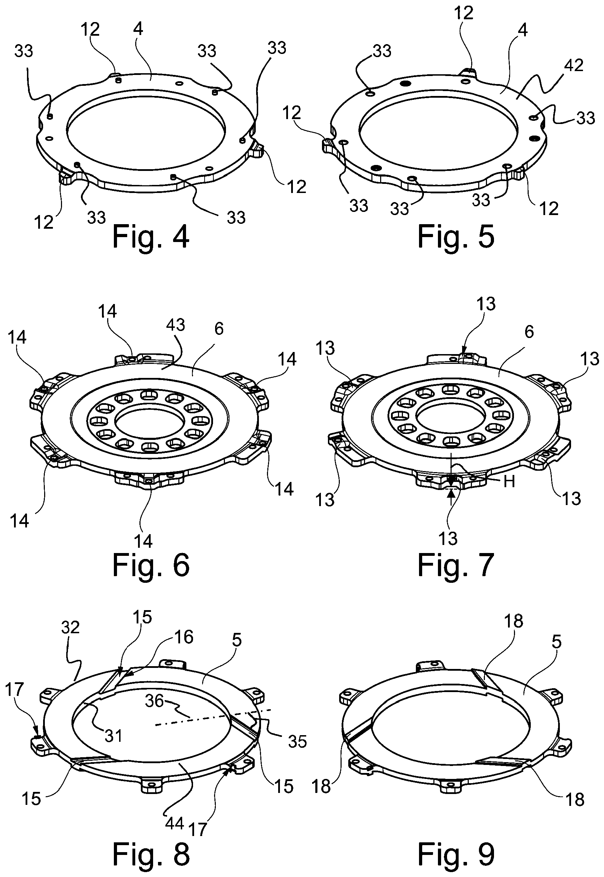

Fig. 4 und 5 zeigen zwei Ansichten aus entgegengesetzten Richtungen eines Beispiels einer zweiten Anpressplatte 4 mit zweiter Reibfläche 42. Diese weist zweite Durchstellungen 33 auf, die mit Sperrelementen eines weiteren Bauteils zur Definition der Position dieses Bauteils bei der Montage an der zweiten Anpressplatte 4 zusammenwirken, insbesondere eines hier nicht gezeigten Drucktopfes der Reibkupplung 1. Hier wird durch die zweiten Durchstellungen 22 eine Flankenzentrierung bei gleichzeitiger Verdrehsicherung erreicht.

Fig. 6 und 7 zeigen zwei Ansichten des zweiten Zentralplattenbauteils 6 aus entgegengesetzten Richtungen. Dieses ist im eingebauten Zustand mit einer Reibfläche 43 der zweiten Anpressplatte 4 zugewandt. Das zweite Zentralplattenbauteil 6 weist erste Erhebungen 34 auf, die ebenfalls als Durchstellungen ausgeführt sind. Die Höhe H dieser ersten Erhebungen 34 entspricht der Höhe H der Nuten 7.

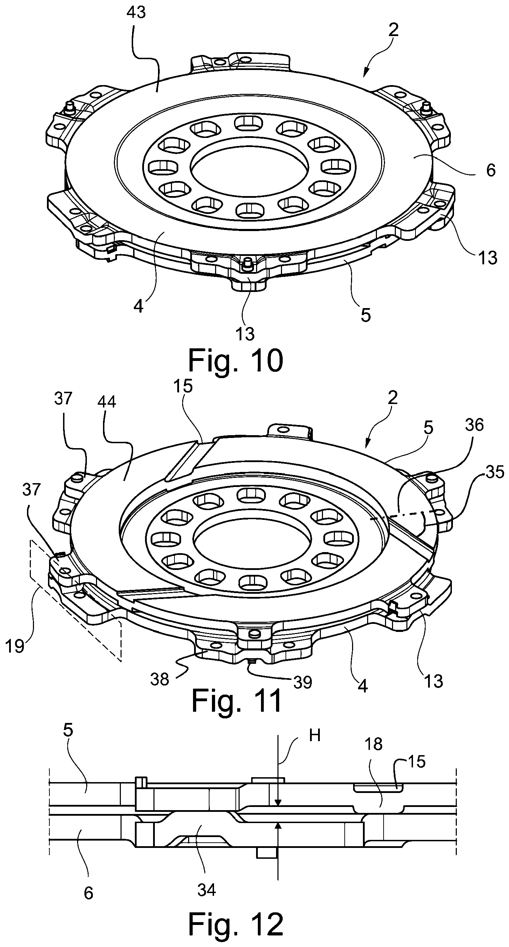

Fig. 8 und 9 zeigen zwei Ansichten des ersten Zentralplattenbauteils 5 aus entgegengesetzten Richtungen. Das erste Zentralplattenbauteil 5 ist im eingebauten Zustand mit einer Reibfläche 44 der ersten Anpressplatte 3 zugewandt. Diese Reibfläche 44 weist Nuten 15 auf, die ebenfalls als Durchstellungen mit entsprechenden Erhebungen 18 auf der gegenüberliegenden Seite des ersten Zentralplattenbauteils 5 ausgeführt sind. Die Nuten 15 weisen entsprechend Kanten 16 auf und reichen von einem inneren Rand 31 der Reibfläche 44 zu einem äußeren Rand 32 der Reibfläche 44. Die Nuten 15 sind schräg in Bezug auf eine radiale Richtung ausgerichtet. Erstes Zentralplattenbauteil 5 und zweites Zentralplattenbauteil 6 werden so zusammengefügt, dass die Seite des zweiten Zentralplattenbauteils 5, die die Erhebungen 18 der ersten Zentralplatte 5 in Richtung der ersten Erhebungen 34 der zweiten Zentralplatte 6 weisen, wie nun in Bezug auf die Figuren 10 bis 12 näher erläutert wird. Das erste Zentralplattenbauteil 5 weist darüber hinaus Verschleißanschläge 17 auf, die den minimal möglichen Abstand zu einem benachbarten Bauteil definieren.

Fig. 10 bis 11 zeigen zwei Ansichten der montierten Zentralplatte aus jeweils entgegengesetzten Richtungen, Fig. 12 zeigt eine Ansicht aus Sicht des Bereichs 19 aus Fig. 11 in Vergrößerung. Das erste Zentralplattenbauteil 5 (vgl. Fig. 8, 9) ist mit drei

Nuten 7 ausgebildet, die in einem Winkel 35 zur radialen Richtung 36 ausgerichtet sind, das zweite Zentralplattenbauteil 6 ist wie in Fig. 6, 7 gezeigt ausgebildet. Das erste Zentralplattenbauteil 5 weist dabei dritte Verbindungselemente 37 und das zweite Zentralplattenbauteil 6 weist vierte Verbindungselemente 38 auf. Diese Verbindungselemente 37, 38 sind über Niete 39 miteinander verbunden, um so die Zentralplatte 2 zu bilden.

Fig. 12 zeigt Details der Zentralplatte 2 aus Sicht des Bereichs 19 wie in Fig. 11 gezeigt. Hierbei sind die ersten Erhebungen 34 und die Nuten 15 und entsprechende Erhebungen 18 so in ihren Höhen H aufeinander abgestimmt, dass es eine Vielzahl von Kontaktstellen zwischen erstem Zentralplattenbauteil 5 und zweitem Zentralplattenbauteil 6 gebildet werden, die zu einer hohen Steifigkeit der Zentralplatte 2 führen. Wie links zu sehen entspricht die Position der ersten Erhebung 34 im zweiten Zentralplattenbauteil 6 keiner Position einer Nut 15 im ersten Zentralplattenbauteil 5.

Sind, wie im vorliegenden Beispiel, diese Kontaktsteilen weitgehend symmetrisch in Umfangsrichtung ausgebildet, kann für die Zentralplatte 2 eine sehr hohe und in Umfangsrichtung homogene Steifigkeit erreicht werden. Durch die Anordnung einer Mehrzahl von Nuten 15 im Winkel 35 zur radialen Richtung 36 und deren gleichmäßige Verteilung über den Umfang der Zentralplatte 2 kann eine effiziente Lüftung und damit Kühlung der Zentralplatte 2 in Rotation erreicht werden. Insbesondere wirken die Nuten 15 und korrespondierenden Erhebungen 18 durch ihre Ausrichtung als aktives Kühlelement nach Art eines Schaufelrades.

Entsprechende Nuten 7, 15 können in eines oder alle der Bauteile: die erste Anpressplatte 3, die zweite Anpressplatte 4, das erste Zentralplattenbauteil 5 und/oder das zweite Zentralplattenbauteil 6 eingebracht werden. Die Zahl der Nuten 7, 15 in diesen Bauteilen 3, 4, 5, 6 kann identisch oder unterschiedlich sein. Die Winkel 35 zur radialen Richtung 36 können für alle Nuten 7, 15 in allen Bauteilen 3, 4, 5, 6 identisch sein oder sich unterscheiden. Durch eine geeignete Wahl der Anzahl der Nuten 7, 15 in den jeweiligen Bauteilen 3, 4, 5, 6 und die geeignete Wahl der Winkel 35 zur radialen Richtung 36 in den jeweiligen Bauteilen 3, 4, 5, 6 und/oder den jeweiligen Nuten 7, 15 kann eine Anpassung beispielsweise an die notwendigen abzuführenden thermischen Leistungen und/oder den entstehenden Abrieb erfolgen.

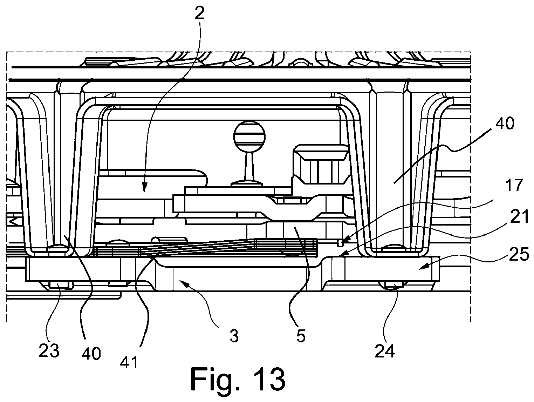

Fig. 13 zeigt ein Detail der zusammengebauten Reibkupplung mit Zentralplatte 2 und erster Anpressplatte 3. Das der ersten Anpressplatte 3 zugewandte erste Zentralplattenbauteil 5 weist dabei die Verschleißanschläge 17 auf, die einen minimalen Abstand zum benachbarten Bauteil, hier einem Anschlag 21 einer korrespondierenden Gegenfläche 25 der ersten Anpressplatte 3, definieren. Weiterhin ist eine Anbindung 23 ausgebildet, die gleichzeitig einen Zuganker 38 und Blattfedern 39 an die erste Anpressplatte 3 anbindet. In einer Anbindung 24 ist der Zuganker 38 an der ersten Anpressplatte 3 befestigt.

## Patentansprüche

1. Reibkupplung (1), insbesondere für den Antriebsstrang eines Kraftfahrzeugs, zum Kuppeln einer Eingangswelle mit einer ersten Ausgangswelle und/oder einer zweiten Ausgangswelle, mit einer zweilagigen Zentralplatte (2), einer ersten Anpressplatte (3), die zum Verpressen mindestens eines ersten Reibbelags (28) einer ersten Kupplungsscheibenanordnung (26) zwischen der ersten Anpressplatte (3) und der Zentralplatte (2) axial verlagerbar ist, und einer zweiten Anpressplatte (4), die zum Verpressen mindestens eines zweiten Reibbelags (29) einer zweiten Kupplungsscheibenanordnung (27) zwischen der zweiten Anpressplatte (4) und der Zentralplatte (2) axial verlagerbar ist, wobei durch die axiale Verlagerung der ersten (3) und zweiten Anpressplatte (4) ein Reibschluss zwischen einer Reibfläche (30, 42) der jeweiligen Anpressplatte (3, 4) und Reibbelägen (28, 29) der jeweiligen Kupplungsscheibenanordnung (26, 27) und zwischen den Reibbelägen (28, 29) der jeweiligen Kupplungsscheibenanordnung (26, 27) und einer Reibfläche (43, 44) der Zentralplatte (2) herstellbar und aufhebbar ist, **dadurch gekennzeichnet, dass** mindestens eines der folgenden Elemente:
- die erste Reibfläche (30) der ersten Anpressplatte (3),
- die zweite Reibfläche (42) der zweiten Anpressplatte (4) und
- mindestens eine der Reibflächen (43, 44) der Zentralplatte (2) mit mindestens einer Nut (7, 15) ausgebildet ist, die jeweils von einem inneren Rand (31) der jeweiligen Reibfläche (30, 42, 43, 44) zu einem äußeren Rand (32) der jeweiligen Reibfläche (30, 42, 43, 44) reicht, wobei ein erstes Zentralplattenbauteil (5) eine erste Lage der Zentralplatte (2) bildet und ein zweites Zentralplattenbauteil (6) eine zweite Lage der Zentralplatte (2) bildet, wobei mindestens eines der die Lagen der Zentralplatte (2) bildenden Zentralplattenbauteile (5, 6) mindestens eine Nut (7, 15) in der jeweiligen Reibfläche (43, 44) aufweist und das die jeweils andere Lage bildende Zentralplattenbauteil (6, 5) auf der der jeweiligen Reibfläche entgegengesetzten Seite mindestens eine erste Erhebung (34) mit einer Höhe (H) aufweist, die der Höhe (H) der jeweiligen Nut (7, 15) entspricht.

2. Reibkupplung (1) nach Anspruch 1, bei der die mindestens eine Nut (7, 15) als Durchstellung ausgebildet ist.

3. Reibkupplung (1) nach einem der vorhergehenden Ansprüche, bei der die mindestens eine Nut (7, 15) in einem von Null verschiedenen Winkel (35) relativ zur radialen Richtung (36) ausgebildet ist.

4. Reibkupplung (1) nach einem der vorhergehenden Ansprüche, bei der mindestens eines der folgenden Bauteile: die erste Anpressplatte (3), die zweite Anpressplatte (3), das erste Zentralplattenbauteil (5) und das zweite Zentralplattenbauteil (6) aus Blech ausgebildet ist.

5. Reibkupplung (1) nach einem der vorhergehenden Ansprüche, bei der die mindestens eine erste Erhebung (34) eine Position aufweist, die der Position keiner Nut (7, 15) in dem die jeweils anderen Lage der Zentralplatte (2) bildenden Zentralplattenbauteil (5, 6) entspricht.

6. Reibkupplung (1) nach einem der vorhergehenden Ansprüche, bei der mindestens eines der folgenden Elemente: die erste Anpressplatte (3), die zweite Anpressplatte (4), ein die erste Lage der Zentralplatte (2) bildendes erstes Zentralplattenbauteil (5) und ein die zweite Lage der Zentralplatte (2) bildendes Zentralplattenbauteil (6) mindestens einen Verschleißanschlag (17) umfasst, der einen Minimalabstand zum in Reibschluss bringbaren benachbarten Element festlegt.

7. Reibkupplung (1) nach einem der vorhergehenden Ansprüche, bei der die zweite Anpressplatte (4) mindestens zwei zweite Durchstellungen (33) zum Zusammenwirken mit Sperrelementen eines weiteren Bauteils zur Definition der Position dieses Bauteils bei der Montage an der zweiten Anpressplatte (4) aufweist.

## Claims

1. A friction clutch (1), in particular for the drive train of a motor vehicle, for coupling an input shaft to a first output shaft and/or a second output shaft, having a two-layer central plate (2), a first pressure plate (3), which can be axially displaced between the first pressure plate (3) and the central plate (2) in order to compress at least one first friction lining (28) of a first clutch disc arrangement (26), and a second pressure plate (4), which can be axially displaced between the second pressure plate (4) and the central plate (2) in order to compress at least a second friction lining (29) of a second clutch disc arrangement (27), wherein, through the axial displacement of the first (3) and second pressure plate (4), a frictional engagement can be produced and released between a friction surface (30, 42) of the pressure plate (3, 4) and friction linings (28, 29) of the clutch disc arrangement (26, 27) and between the friction linings (28, 29) of the clutch disc arrangement (26, 27) and a friction surface (43, 44) of the central plate (2), **characterised in that** at least one of the following elements:
- the first friction surface (30) of the first pressure plate (3),
- the second friction surface (42) of the second pressure plate (4) and
- at least one of the friction surfaces (43, 44) of the central plate (2)
is formed with at least one groove (7, 15), each of which extends from an inner edge (31) of the friction surface (30, 42, 43, 44) to an outer edge (32) of the friction surface (30, 42, 43, 44), wherein a first central plate component (5) forms a first layer of the central plate (2) and a second central plate component (6) forms a second layer of the central plate (2), wherein at least one of the central plate components (5, 6) forming the layers of the central plate (2) has at least one groove (7, 15) in the friction surface (43, 44) and the central plate component (6, 5) forming the other layer in each case has at least one first elevation (34) with a height (H) on the side opposite the friction surface, which elevation corresponds to the height (H) of the groove (7, 15).

2. The friction clutch (1) according to claim 1, in which the at least one groove (7, 15) is designed as a passage.

3. The friction clutch (1) according to one of the preceding claims, in which the at least one groove (7, 15) is formed at a non-zero angle (35) relative to the radial direction (36).

4. The friction clutch (1) according to one of the preceding claims, in which at least one of the following components, the first pressure plate (3), the second pressure plate (3), the first central plate component (5) and the second central plate component (6), is made of sheet metal.

5. The friction clutch (1) according to one of the preceding claims, in which the at least one first elevation (34) has a position which does not correspond to the position of any groove (7, 15) in the central plate component (5, 6) forming the other layer of the central plate (2) in each case.

6. The friction clutch (1) according to one of the preceding claims, in which at least one of the following elements, the first pressure plate (3), the second pressure plate (4), a first central plate component (5) forming the first layer of the central plate (2) and a central plate component (6) forming the second layer of the central plate (2), comprises at least one wear stop (17), which defines a minimum distance to the adjacent element that can be brought into frictional engagement.

7. The friction clutch (1) according to one of the preceding claims, in which the second pressure plate (4) has at least two second passages (33) for interacting with locking elements of a further component to define the position of this component during assembly on the second pressure plate (4).

## Revendications

1. Embrayage à friction (1), destiné en particulier à la chaîne cinématique d'un véhicule automobile, pour accoupler un arbre d'entrée à un premier arbre de sortie et/ou à un second arbre de sortie, comprenant une plaque centrale (2) à deux couches, une première plaque de pression (3) qui peut être déplacée axialement entre la première plaque de pression (3) et la plaque centrale (2) pour presser au moins une première garniture de friction (28) d'un premier ensemble de disques d'embrayage (26) et une seconde plaque de pression (4) qui peut être déplacée axialement entre la seconde plaque de pression (4) et la plaque centrale (2) pour presser au moins une seconde garniture de friction (29) d'un second ensemble de disques d'embrayage (27), le déplacement axial des première (3) et seconde (4) plaques de pression permettant d'établir et de supprimer une mise en prise par friction entre une surface de friction (30, 42) de la plaque de pression (3, 4) respective et des garnitures de friction (28, 29) de l'ensemble de disques d'embrayage (26, 27) respectif et entre les garnitures de friction (28, 29) de l'ensemble de disques d'embrayage (26, 27) respectif et une surface de friction (43, 44) de la plaque centrale (2), **caractérisé en ce qu'**au moins l'un des éléments suivants :
- la première surface de friction (30) de la première plaque de pression (3),
- la seconde surface de friction (42) de la seconde plaque de pression (4) et
- au moins une des surfaces de friction (43, 44) de la plaque centrale (2)
est conçu avec au moins une gorge (7, 15) s'étendant chacune d'un bord intérieur (31) de la surface de friction (30, 42, 43, 44) respective à un bord extérieur (32) de la surface de friction (30, 42, 43, 44) respective, un premier élément de plaque centrale (5) formant une première couche de la plaque centrale (2) et un second élément de plaque centrale (6) formant une seconde couche de la plaque centrale (2), au moins un des éléments de plaque centrale (5, 6) formant les couches de la plaque centrale (2) présentant au moins une gorge (7, 15) dans la surface de friction (43, 44) respective et l'élément de plaque centrale (6, 5) formant l'autre couche respective présentant au moins une première élévation (34), sur le côté opposé à la surface de friction respective, présentant une hauteur (H) qui correspond à la hauteur (H) de la gorge (7, 15) respective.

2. Embrayage à friction (1) selon la revendication 1, dans lequel l'au moins une gorge (7, 15) est réalisée sous la forme d'un passage.

3. Embrayage à friction (1) selon l'une quelconque des revendications précédentes, dans lequel l'au moins une gorge (7, 15) est formée selon un angle non nul (35) par rapport à la direction radiale (36).

4. Embrayage à friction (1) selon l'une quelconque des revendications précédentes, dans lequel au moins l'un des éléments suivants : la première plaque de pression (3), la seconde plaque de pression (3), le premier élément de plaque centrale (5) et le second élément de plaque centrale (6) est en tôle.

5. Embrayage à friction (1) selon l'une quelconque des revendications précédentes, dans lequel l'au moins une première élévation (34) présente une position qui correspond à la position sans gorge (7, 15) dans l'élément de plaque centrale (5, 6) formant l'autre couche respective de la plaque centrale (2).

6. Embrayage à friction (1) selon l'une quelconque des revendications précédentes, dans lequel au moins l'un des éléments suivants : la première plaque de pression (3), la seconde plaque de pression (4), un premier élément de plaque centrale (5) formant la première couche de la plaque centrale (2) et un élément de plaque centrale (6) formant la seconde couche de la plaque centrale (2) comprend au moins une butée d'usure (17) qui définit une distance minimale jusqu'à l'élément adjacent qui peut être mis en contact par friction.

7. Embrayage à friction (1) selon l'une quelconque des revendications précédentes, dans lequel la seconde plaque de pression (4) présente au moins deux seconds passages (33) de coopération avec des éléments de blocage d'un autre élément pour définir la position de cet élément lors du montage sur la seconde plaque de pression (4).
